# EUROPEAN PATENT SPECIFICATION

(11) **EP 4 556 769 B1**
(45) Date of publication and mention of the grant of the patent: **04.11.2026**
(21) Application number: 23210720.1
(22) Date of filing: 17.11.2023
(51) Int. Cl.: F16K 17/04, F16K 1/52, F24D 19/10

(54) **AUTONOMOUS AUXILIARY OPENING MECHANISM FOR OPENING A CLOSED RADIATOR VALVE AND HEATING SYSTEM**
AUTONOMER HILFSÖFFNUNGSMECHANISMUS ZUM ÖFFNEN EINES GESCHLOSSENEN HEIZKÖRPERVENTILS UND HEIZSYSTEM
MÉCANISME D'OUVERTURE AUXILIAIRE AUTONOME POUR L'OUVERTURE D'UNE VANNE DE RADIATEUR FERMÉE ET SYSTÈME DE CHAUFFAGE

(43) Date of publication of application: 21.05.2025
(73) Proprietor: Danfoss A/S, 6430 Nordborg (DK)
(72) Inventor: Andersen, Mads, 6430 Nordborg (DK); Larsen, Hans Erik, 6430 Nordborg (DK)
(74) Representative: Keil & Schaafhausen Patentanwälte PartGmbB

(56) References cited:
- EP-A1- 3 742 059
- DE-A1- 10 256 021
- DE-U1- 20 210 540
- KR-A- 20180 043 728

## Description

The present invention discloses an auxiliary opening mechanism for opening a closed radiator valve, the radiator valve having an inlet port and an outlet port. Further, the invention relates to a heating system.

KR 2018 0043728 A discloses a pressure reducing valve used in a hot water supply system.

A known heating system for a building comprises a heat pump and several radiators for heating rooms inside the building. The heat pump takes up heat from the environment outside the building, e.g. from outside air or from the ground, and provides heat via a primary fluid circuit with a primary fluid (typically a refrigerant) to a primary side of a heat exchanger. A secondary fluid circuit with a secondary fluid (for example including water) is connected with a secondary side of the heat exchanger. In the heat exchanger, the primary fluid gives off heat to the secondary fluid. The secondary fluid circuit includes a circulation pump and several radiators, each being equipped with a corresponding radiator valve for adjusting a flow of the secondary fluid through the respective radiator. By means of the circulation pump and the circulated secondary fluid, heat can be provided to the radiators. The radiators are installed in the rooms of the building and allow heating the rooms by dissipating heat from the secondary fluid.

Each radiator valve independently controls and restricts a flow of the secondary fluid through the respective radiator. Typically, each of the radiator valves is actuated by a corresponding thermostat actuator. The latter controls opening and closing of the radiator valve.

It is desired to maintain a certain temperature drop of the primary fluid across the heat exchanger, i.e. from an inlet for the primary fluid at the heat exchanger to an outlet for the primary fluid at the heat exchanger. This ensures high efficiency of the heat pump. The desired temperature drop may be in the range from 5 K to 15 K. The heat pump comprises a compressor.

When an outdoor temperature rises, less heating power is required by the secondary fluid circuit to reach desired rooms temperatures. The secondary fluid takes up less heat in the heat exchanger. A controller for controlling the heat pump reduces a power of the heat pump, e.g. by reducing a frequency of the compressor in order to maintain the desired temperature drop of the primary fluid across the heat exchanger.

The frequency of the compressor should not be decreased below a minimum frequency. Otherwise, running the compressor would be inefficient. In order to avoid that the temperature drop of the primary fluid across the heat exchanger falls below the desired temperature drop when the heat uptake by the secondary fluid circuit decreases further, the controller additionally reduces the power of the heat pump by temporarily shutting off the compressor. The operation of the compressor is cycled in order to provide less heat to the heat exchanger over time. The compressor is running with the minimum frequency during the duty cycles and does not run during the non-duty cycles.

There is also a required minimum time for each duty cycle of the compressor in order to avoid damage of the heat pump, especially due to liquid primary fluid being sucked into the compressor. Hence, a total heat output supplied by the heat pump in one duty cycle cannot be reduced below a certain minimum heat output (depending on the minimum frequency during the duty cycles and the minimum time for each duty cycle), except by not operating the heat pump at all. The latter option is not applicable if at least some heating power for the building is required, wherein at least some of the radiator valves open from time to time.

No circulation of the secondary fluid is possible while all radiator valves are closed at the same time. For example, when the outdoor temperature is high for a longer time and/or if sunlight heats up the rooms, the room temperatures inside the building rise as well. Finally, all room temperatures are so high that - at least temporarily for some time period - all radiator valves are closed by the corresponding thermostat actuators. As a result, there is no flow of the secondary fluid through the heat exchanger during this time period. As a volume and a heat capacity of the secondary fluid trapped within the heat exchanger during this time period are limited, the temperature of the said volume rises. The heat transfer from to primary fluid to the secondary fluid within the heat exchanger becomes more and more difficult. Although the heat pump may be operated providing only the minimum heat output, the heat provided to the heat exchanger via the primary fluid cannot be sufficiently transferred to the secondary fluid in this case. The temperature drop of the primary fluid across the heat exchanger decreases. It may finally even become zero. In addition, total temperatures of the primary fluid within the primary fluid circuit might rise. As a consequence, an internal pressure of the heat pump rises. When the internal pressure exceeds a certain threshold (i.e. when there is an overpressure in the heat pump), the heat pump enters an error state and/or gives an overpressure alarm. Once the heat pump has entered the error state, a manual reset of the heat pump is required. This is annoying for users. Furthermore, the overpressure can damage internal components of the heat pump.

To avoid such overpressures, one or two radiator valves can be purely manually controlled valves. These valves must remain open to a certain degree at any time in order to allow a minimum circulation of the secondary fluid for distributing heat provided from the primary fluid through the heat exchanger. However, the rooms having the manual controlled radiator valves are selectively heated more than needed, resulting in excessively high room temperatures specifically in these rooms. There is a severe risk that the manually controlled valves are closed by a user such that the problem explained above occurs again.

An alternative solution is provided by a heating/cooling system described in US 9,404,664 B2. The system comprises a main supply pipe for supplying liquid to a manifold. The manifold distributes the liquid into various heating loops. The heating loops return the fluid to a return manifold. At least one of the manifolds has actuators for adjusting the flows through the heating loops. A central control unit controls the actuators. At least one loop is designated to be a bypass loop. The control unit ensures that the actuator of the bypass loop is open whenever all the other actuators are closed. This solution does not work when the actuator for the bypass loop fails or if the bypass loop as such is blocked.

The above-described solutions for preventing an overpressure in the heat pump can be either outwitted respectively overruled by a user, or they require complex actuator-controlled manifolds and a respective central controlling of and electric energy supply to all actuators for the various heating loops.

The objective of the present invention is to provide a reliable and cost-efficient solution for ensuring improper states in a heating system with a heat pump and radiators at times when only little heating power is required.

This objective is solved by an auxiliary opening mechanism for opening a closed radiator valve according to claim 1.

Inter alia, the auxiliary opening mechanism comprises the radiator valve having an inlet port and an outlet port, wherein the auxiliary opening mechanism is configured such that a pressure drop from the inlet port to the outlet port mechanically opens a fluid flow path from the inlet port to the outlet port when the pressure drop exceeds a pressure drop threshold while the radiator valve is closed.

The pressure drop from the inlet port to the outlet port may be shortly referred to as "forward pressure drop". An intended flow direction of fluid through the radiator valve may be from the inlet port to the outlet port.

The forward pressure drop may be defined as a difference of a pressure of fluid in the inlet port (inlet-side pressure) minus a pressure of fluid in the outlet port (outlet-side pressure), wherein the term "drop" means that the inlet-side pressure is higher than the outlet-side pressure.

Vice versa, a "rearward pressure drop" may indicate a pressure drop from the outlet port to the inlet port, i.e. that the outlet-side pressure is higher than the inlet-side pressure. Where nothing else is stated, the term pressure drop may mean a forward pressure drop only.

The auxiliary opening mechanism is sensitive to the pressure drop over the radiator valve. If the pressure drop exceeds the pressure drop threshold, the mechanism automatically opens the flow path (without using an actuator for/of the radiator valve). Solely the pressure drop actuates the auxiliary opening mechanism. This is simple and cost effective.

The auxiliary opening mechanism is autonomous. No external controller is needed. No electricity is needed for providing the auxiliary opening functionality. No user action is required. The auxiliary opening mechanism is autonomous/independent (e.g. from external controllers and/or user operations). It is therefore particularly reliable and cannot be easily outwitted and/or overruled by a user.

As described above, a heating system may comprise a primary fluid circuit with a heat pump, a secondary fluid circuit with a circulation pump and at least one radiator, and a heat exchanger for transferring heat from a primary fluid (e.g. a refrigerant) of the primary fluid circuit to a secondary fluid (e.g. including water) of the secondary fluid circuit. With the disclosed auxiliary opening mechanism for opening the radiator valve, the latter being functionally coupled with (e.g. directly mounted at) the at least one radiator, the circulation pump can circulate the secondary fluid in the secondary fluid circuit (due to the flow path opened by the auxiliary opening mechanism) even
- while (a flow valve of) the radiator valve would - if the auxiliary opening mechanism were not present - remain closed, e.g. because the corresponding room temperature is above a target temperature of the actuator mounted on the radiator valve and
- although there is no other open circulation path in the secondary fluid circuit in parallel to the radiator valve at the same time.
Since the circulation pump circulates the secondary fluid, the primary fluid can still release heat to the secondary fluid. Thus, a risk of "overheating" and/or "over-pressuring" the primary fluid in the primary fluid circuit is low. Accordingly, a risk of errors and/or failures in the heating system, especially due to overpressure in the heat pump, is low.

The invention allows that
- the user has full temperature control in all rooms (at least in normal operation if at least one of the radiator valves is open) and
- that in the case that all radiator valves are closed and when the pressure drop exceeds the pressure drop threshold at the same time, those radiator valves for which the auxiliary opening mechanism is implemented open in parallel.
As each radiator valve for which the auxiliary opening mechanism is implemented opens its own corresponding flow path, the heat dissipation is distributed over all corresponding radiators. In other words, the "unwanted" heat is dissipated to several radiators and rooms. This avoids excessively high room temperatures in one single room (like if only a designated bypass loop would be used).

In other words, an autonomous auxiliary opening mechanism for opening the closed radiator valve, mechanically driven by a local pressure-drop over the radiator valve (along an intended flow direction), is provided.

Further, the invention is advantageous when the heat pump tries to defrost an evaporator while the radiator valves are closed. In this case, the heat pump tries to transfer energy from the heating installation to the evaporator (in an outdoor unit) for heating/defrosting of the evaporator. The invention allows to "catch" energy from radiators even when their radiator valves are closed. This reduces a defrost time. During defrosting, the heat pump will set the circulation pump to a maximum speed. This causes that the pressure drop is higher than the pressure drop threshold. The invention allows that the secondary fluid is circulated in this situation even through those radiators for which the corresponding radiator valves are closed.

As soon as the pressure drop is sufficient, the auxiliary opening mechanism "overrules" that the radiator valve is intended to be closed, for example due to a mechanical actuation action provided by the actuator coupled to (e.g. mounted to) the radiator valve.

The pressure drop (from the inlet port to the outlet port may mechanically open the fluid flow path extending along the radiator valve, especially within the radiator valve.

In one embodiment, the auxiliary opening mechanism comprises a resilient counteractor counteracting an opening force (for opening the flow path by means of the auxiliary opening mechanism), which is caused by the pressure drop (at least) while the radiator valve is closed (is in a closed state). The resilient counteractor may prevent the pressure drop from mechanically opening the fluid flow path of the auxiliary opening mechanism when the pressure drop is lower than the pressure drop threshold while the radiator valve is closed (in the closed state).

The resilient counteractor ensures that the auxiliary opening mechanism overrules the "intended" closed state of the radiator valve (and hence, for example a temperature target set by a user) only when the pressure drop exceeds the pressure drop threshold (but not when the pressure drop is lower than the pressure drop threshold).

The resilient counteractor provides a resilient biasing force that must be overcome by the pressure drop in order to open the flow path while the radiator valve is closed.

In one embodiment, a specific valve member lifts off from a specific valve seat when the pressure drop (from the inlet port to the outlet port) mechanically opens the fluid flow path of the auxiliary opening mechanism as described above, the specific valve member thereby opening said fluid path. Hence, (secondary) fluid can pass between the specific valve seat and the specific valve member (although the radiator valve would remain completely closed - and hence would block any fluid flow through the radiator valve - if the auxiliary opening mechanism were not present). At least while the radiator valve is closed and while, at the same, time the pressure drop is lower than the pressure drop threshold (or even negative, i.e. rearward), the specific valve member may abut and seal against the specific valve seat. Thereby, the flow path remains closed at least under these circumstances. Examples for the specific valve seat and the specific valve member are described in more detail below.

The resilient counteractor may include a spring-elastic element, e.g. a spring. The spring can be in accordance with one of, several of, or all of the following types: an axial spring, a compression spring, a coil spring, and a metal spring.

The resilient counteractor may be mechanically coupled or at least mechanically couplable to the specific valve element. The resilient counteractor may bias the specific valve element into abutment with the specific valve element. The pressure drop may urge the specific valve element towards lifting off from the specific valve seat.

The auxiliary opening mechanism is configured such that the pressure drop threshold is adjustable. This allows for adapting the auxiliary opening mechanism to different heating systems and/or operating conditions.

For example, the auxiliary opening mechanism may be configured that a pre-load provided by the resilient counteractor is adjustable and/or that the resilient counteractor is changeable. Different counteractors providing different pre-loads may be provided. The different counteractors may differ in one of, several of, or all of the following: Material, shape, length (e.g. in a non-compressed state), spring constant, and the like.

In one embodiment, the pre-load provided by the resilient counteractor is adjustable by a spacer and/or a threaded adjusting means. Both alternatives, the spacer and the threaded adjusting means, allow an easy adjustment of the spring pre-load and therefore it is easy to adjust the pressure drop threshold.

The spacer may reduce a space available for the resilient counteractor, e.g. according to an effective thickness of the spacer. This increases the pre-load of the resilient counteractor. This finally increases the pressure drop threshold. With a single removable space, two different pressure drop thresholds can be set. Several spacers with different effective thicknesses may be provided, thereby allowing to set a plurality of different pressure drop thresholds.

The threaded adjusting means can include two elements being threadedly connected with each other, wherein the pre-load can be adjusted by screwing a first element of said two elements relative to a second element of said two elements. Screwing the first element in a first screwing direction relative to the second element may increase the resilient biasing force, e.g. by further compressing the resilient counteractor (e.g. the spring). Screwing the first element in a second screwing direction relative to the second element may decrease the resilient biasing force.

The threaded connection may comprise a predefined thread pitch (pitch). For example, the pitch can be 1 mm per revolution, such that the resilient counteractor is further compressed by 1 mm for each revolution by which the first element is screwed in the first screwing direction relative to the second element. The rising compression of the resilient counteractor increases the resilient biasing force and hence the pressure drop threshold. Further relaxation of the resilient counteractor decreases the pre-load and hence the pressure drop threshold.

The pre-load provided by the resilient counteractor may be determined when the radiator valve is closed and when, at the same time, the pressure drop is zero (no pressure drop). According to another aspect, the pre-load provided by the resilient counteractor may be determined when the radiator valve is closed and when, at the same time, the opening force caused by the pressure drop is equal to the counteracting resilient biasing force.

According to one aspect, the pressure drop threshold is at least 0,2 bar, may be at least 0,3 bar or at least 0,5 bar. Additionally or alternatively, the pressure drop threshold may be 0,8 bar at the maximum. For example, the pressure drop threshold is in the range from 0,3 bar to 0,8 bar. In one embodiment, the pressure drop threshold is adjustable to at least two different pressure drop thresholds values, each being in accordance with one of, several of, or all of the limits described above. Especially, the pressure drop threshold may be adjustable to at least two (maybe at least three) different pressure drop thresholds values, each being in the range from 0,2 bar to 0,8 bar, for example from 0,3 bar to 0,8 bar, especially from 0,5 bar to 0,8 bar.

In one embodiment, the auxiliary opening mechanism is configured such that the user cannot completely prevent opening of the flow path by the auxiliary opening mechanism. According to another aspect, the auxiliary opening mechanism is de-activatable only by a specific tool. This reduces the risk of the user outwitting the auxiliary opening mechanism but allows that a professional can deactivate it if favorable. This makes the auxiliary opening mechanism more reliable. This does not contradict that the auxiliary opening mechanism may allow adjusting the pressure drop threshold by the user within a limited range.

The auxiliary opening mechanism comprises the radiator valve. The auxiliary opening mechanism may be formed completely within the radiator valve (as such). In one embodiment, the radiator valve includes the auxiliary opening mechanism completely.

The radiator valve may comprise a balancing means for hydraulic balancing of the radiator valve. The balancing means be arranged downstream of the valve seat. The balancing means may be changeable and/or adjustable.

The radiator valve comprises a flow valve (at least functionally arranged) between the inlet port and the outlet port, wherein the flow valve comprises a valve seat and a valve element moveable relative to the valve seat.

The flow valve (and hence the radiator valve) is closable by moving the valve element into sealing abutment against the valve seat.

The flow valve is openable by lifting off the valve element from abutment with the valve seat. When the flow valve is open, fluid can flow through the flow valve, e.g. pass between the valve seat and the valve element. This might be referred to as "main flow path" within the radiator valve.

The flow valve may be configured to be actuated by the actuator, e.g. a thermostat actuator. It may include a valve pin for receiving the mechanical actuation action. According to one aspect, the valve element may be (at least substantially) arranged at a downstream side of the valve seat (of the flow valve). "Downstream" may be understood with respect to the intended flow direction. Additionally or alternatively, the valve element may abut and seal onto a downstream side of the valve seat when the flow valve is closed.

According to one aspect, the flow valve can be optimized for fluid flow from the inlet port to the outlet port when the flow valve is open. In other words, the radiator valve can be optimized for fluid flow through the flow valve along the intended flow direction.

In one embodiment, the radiator valve includes a bypass valve between the inlet port and the outlet port, wherein the bypass valve is configured to open the flow path (through the bypass valve) when the pressure drop from the inlet port to the outlet port exceeds the pressure drop threshold.

The bypass valve allows to bypass the flow valve of the radiator valve for enabling a flow from the inlet port to the outlet port whenever the pressure drop exceeds the pressure drop threshold.

In these embodiments, the flow path of the auxiliary opening mechanism is opened by the additional bypass valve. The flow path extends through the bypass valve. The flow path of the auxiliary opening mechanism functionally bypasses the flow valve. The flow path of the auxiliary opening mechanism may bypass at least the valve seat (of the flow valve).

The bypass valve may be configured to works autonomous/independently from the flow valve. In other words, the bypass valve also works when the flow valve is stuck. The bypass valve opens when the pressure drop exceeds the pressure drop threshold, irrespective of a state of the flow valve (i.e. whether the flow valve is open or closed).

Further, in the embodiments with the additional bypass valve, the auxiliary opening mechanism can be separate/independent from a mechanical coupling between the valve element (of the flow valve) and the actuator. An interaction between the flow valve and the actuator is not affected.

The bypass valve may be functionally arranged in parallel to the flow valve. The first fluid path and the second fluid path may be at least partly spatially separated.

The radiator valve may be configured to open and close the main flow path completely controlled by the actuator mounted to the radiator valve and mechanically coupled to the flow valve.

The radiator valve may include a main body. The main body may include at least the inlet port, the outlet port, and the valve seat (of the flow valve). The main body may be integrally formed in one piece.

The radiator valve may comprise a valve housing. The main body may form part the valve housing.

In one embodiment, the bypass valve is a one-way valve. This prevents unintended "rearward" flow (i.e. opposite to the intended flow direction) through the radiator valve via the bypass valve. A one-way valve is cheap and cost effective.

According to one aspect, the bypass valve comprises a second valve seat (a bypass valve seat) and a second valve element (a bypass valve element).The second valve element may be biased to the second valve seat. For example, the resilient counteractor may bias the second valve element to the second valve seat. In this case, the second valve element is the specific valve element and the second valve seat is the second valve seat. In other words, the valve seat (of the flow valve) is a first valve seat and the valve element (of the flow valve) is a first valve element, wherein the bypass valve comprises the second valve seat and the second valve element.

The second valve element may be moveable relative to the second valve seat. The second valve element may be biased against the intended fluid flow direction through the bypass valve.

The second valve seat may be formed in the main body. This ensures the cost-efficient production and small size of the radiator valve.

The radiator valve may be configured that the second valve element is changeable. Several types of second valve elements may be provided, e.g. differing in size, thickness, material, and/or weight. Additionally or alternatively, the second valve seat can be changeable. Several types of second valve seats may be provided, e.g. differing in size, inner diameter, and existence/size of additional flow restrictions. These aspects allow adapting the bypass valve in an easy manner to different requirements, e.g. to adjust the pressure drop threshold.

The resilient counteractor may bias the bypass valve to a closed state. The resilient counteractor provides the resilient biasing force that must be overcome by the pressure drop in order to open the bypass valve. The resilient biasing force acts against the opening force for opening the bypass valve, which is caused by the pressure drop.

As noted above, the resilient counteractor may comprise a spring (including the case that the resilient counteractor is the spring).

According to one aspect, a spring diameter of the spring can be equal or less than 50 % of a diameter of the second valve seat. The (latter) diameter refers to an inner diameter of the second valve seat. This helps in reducing the risk of valve flickering and/or fluttering. The second valve element can include a guidance for a portion of the spring, for example a recess for inserting at least a part of the spring. This reduces the risk that the spring buckles under load.

Additionally or alternatively, the spring is a compression spring engaging the second valve element (or the spacer interposed between the spring and the second valve element) at an engagement section ("touch point"), wherein the engagement section is located above the second valve seat along a closing direction of the second valve element. The engagement section may be the location where the compression spring axially engages, e.g. abuts, the second valve element or the interposed spacer. The closing direction may be orientated against an opening direction of the second valve element (e.g. a direction along which the second valve elements lifts off from the second valve seat for opening the bypass valve). The closing direction may be oriented against the (intended) flow direction of the secondary fluid through the bypass valve (when the bypass valve is open). The second valve element may hence be able for limited pivoting about the engagement section. This helps to prevent flickering and/or fluttering of the valve. Thus, the radiator valve is quiet.

A first end of the spring may abut on the second valve element (or on the spacer interposed between the spring and the second valve element).

A second end of the spring may abut one the valve housing or on an insert secured to the valve housing (e.g. to the main body). The spacer (or another spacer) can be interposed between the second end and the valve housing/the insert.

Regarding the threaded adjustment means, in one example, the insert is the first element of the threaded adjusting means and the housing is the second element of the threaded adjusting means.

The actuator may be configured to provide the mechanical actuating action for actuating the radiator valve, especially for closing the radiator valve, more specifically the flow valve. For example, the mechanical actuation action may include a displacement suitable for pressing the valve element onto the valve seat. The mechanical actuation action may include a force sufficient to overcome a resilient force of a valve opening spring of the flow valve. Forwarding the mechanical actuation action may include pushing the movable valve pin of the radiator valve, e.g. towards the valve seat. In the radiator valve, the valve pin may be functionally (e.g. mechanically) coupled with respect to the valve element such that pushing the pin (e.g. to a certain closing command position) causes the valve element to abut on the valve seat, thereby closing the flow valve.

The actuator can be a completely manual actuator without thermostat.

The actuator may be a thermostat actuator. A target temperature of the thermostat actuator may be adjustable, e.g. by the user. The thermostat actuator may provide the mechanical actuation action based on the target temperature of the thermostat actuator and a temperature at the thermostat actuator. Thermostat actuators are highly available, inexpensive, and easy to install.

The thermostat actuator can be mechanical thermostat actuator.

The thermostat actuator can be an electronic thermostat actuator.

In one embodiment, the thermostat actuator is directly thermally-driven, e.g. driven by the thermal expansion and retraction of a thermal expansion element. For example, the thermostat actuator can include a thermally-driven actuation action generator for generating the mechanical actuation action, e.g. a wax motor. This does, in general, not exclude that the thermostat actuator may comprise electronic means and/or motor means for adjusting the target temperature. However, according to one aspect, the electronic means and/or motors means may only change the target temperature but not generate the mechanical actuating action as such.

According to one aspect, the actuator may be free of electronics and/or free of electrical power inputs and/or supplies (like batteries, accumulators, electrical capacitors, solar cells, inductive charging means, power connectors, and the like).

Such actuators are cost-efficient, reliable, require low maintenance and installation effort.

According to one aspect, the radiator valve includes at least one of
- an actuator mount (for mounting the actuator) and
- the actuator.
As explained above, the actuator may provide the mechanical actuation action for closing the radiator valve.

The actuator may be fixed to the radiator valve permanently or detachably.

In general, the auxiliary opening mechanism may comprise one of, several of, or all of the following:
- the radiator valve,
- the actuator for actuating the radiator valve, and
- an adapter for being mounted between the radiator valve and the actuator.

The adapter is configured to mechanically forward the mechanical actuation action provided by the actuator to the radiator valve (when mounted between the radiator valve and the actuator).

According to one aspect, the auxiliary opening mechanism includes an actuation action neutralizer that resiliently absorbs the mechanical actuation action (provided by the actuator) at least partly when the pressure drop exceeds the pressure drop threshold while the radiator valve is closed. This allows the pressure drop to open the radiator valve - against the mechanical actuation action - at least party, e.g. to lift the valve element away from abutment onto the valve seat. In other words, in this situation, the actuation action neutralizer resiliently neutralizes the mechanical actuation action provided by the actuator at least partly such that it cannot longer hold the flow valve closed. As soon as the pressure drop decreases below the pressure drop threshold while the actuator still provides the mechanical actuation action, the actuation action neutralizer closes the flow valve again automatically (because the mechanical actuation action is not sufficiently absorbed/neutralized by the actuation action neutralizer any longer).

As noted above, the auxiliary opening mechanism includes (at least) the radiator valve, and according to a third sub-aspect, the radiator valve includes the actuation action neutralizer.

According to a first sub-aspect, the auxiliary opening mechanism includes (at least) the actuator, and the actuator includes the actuation action neutralizer.

According to a second sub-aspect, the auxiliary opening mechanism includes (at least) the adapter (for) being mounted between the radiator valve and the actuator, and the adapter includes the actuation action neutralizer.

According to one aspect, not covered by the invention as defined by the claims, there is provided a radiator valve, the radiator valve having
- an inlet port and an outlet port,
- at least one of an actuator mount (for mounting an actuator) and an actuator, and
- a flow valve between the inlet port and the outlet port, wherein the flow valve includes a valve seat and a valve element moveable relative to the valve seat, wherein the flow valve is closable by a mechanical actuating action provided by the actuator,
wherein the radiator valve comprises an actuation action neutralizer that resiliently absorbs the mechanical actuation action (provided by the actuator) at least partly when a pressure drop from the inlet port to the outlet port exceeds the pressure drop threshold while the radiator valve is closed, thereby allowing the pressure drop to lift the valve element (- against the mechanical actuation action -) away from abutment onto the valve seat.

With this embodiment, the auxiliary opening mechanism can be integrated into the radiator valve without needing the additional bypass valve. In this case, the specific valve element is the valve element (of the flow valve) and the specific valve seat is the valve seat (of the flow valve).

According to one aspect, the actuator action neutralizer forwards the mechanical actuation action when the pressure drop is less than the pressure drop threshold. In this situation, the actuation action neutralizer may not impair the mechanical actuation action (i.e. not absorb / neutralize the mechanical actuation action, at least not substantially).

The actuation action neutralizer may comprise an actuator-side portion for receiving the mechanical actuation action. For example, if the actuation action neutralizer is arranged in the adapter or in the radiator valve, the actuator-side portion may be configured to be engaged by the actuator. If the actuation action neutralizer is arranged in the actuator, the actuator-side portion may be configured to be engaged by the actuation action generator.

The actuation action neutralizer may comprise a valve element-side portion. For example, if the actuation action neutralizer is arranged in the adapter or in the radiator valve, the valve element-side portion is mechanically coupled with respect to the valve element such the valve element-side portion follows the movement of the valve element away from the valve seat. If the actuation action neutralizer is arranged in the actuator or in the adapter, the valve element-side portion may be coupled to a pin engager for engaging the valve pin.

In one embodiment, the actuation action neutralizer allows limited movement of the valve element-side portion relative to the actuator-side portion. This allows that an effective total length of the actuation action neutralizer is reducible, e.g. in a telescopic manner. The effective total length can be defined along a force path for forwarding the mechanical actuation action. In operation, under the explained conditions, the pressure drop causes the resilient reduction of the effective total length. The valve element-side portion and the actuator-side portion may be push-able together resiliently.

The resilient counteractor may push the valve element-side portion and the actuator-side portion apart, thereby providing a resilient yield resistance (e.g. by counteracting pushing both portions together).

The actuation action neutralizer may include the resilient counteractor.

According to one aspect, the actuation action neutralizer can include the spacer and/or the threaded adjustment means.

A maximum total length of the actuation action neutralizer may be pre-determined. This allows for high precision of the actuation of the radiator valve in normal operation.

The resilient counteractor ensures that the actuation action neutralizer maintains its maximum effective total length in normal operation. However, when the radiator valve is closed by applying the mechanical actuation action at the actuator-side portion and when, at the same time, the pressure drop exceeds the pressure drop threshold, the opening force caused by the pressure drop becomes sufficient (e.g. by being higher than the counteracting resilient biasing force provided by the pre-load of the resilient counteractor) to compress the resilient counteractor. The actuation action neutralizer resiliently yields by the valve element-side portion being moved relative to the actuator-side portion such that the effective total length of the actuation action neutralizer temporarily decreases, this yield giving space for the valve element to being pushed away from the valve seat, thereby opening the fluid path.

In one example, a valve stem assembly of the radiator valve for mechanically forwarding the mechanical actuation action for closing the flow valve to the valve element comprises the actuation action neutralizer. The valve element-side portion may include the valve element. The valve-element portion and the valve element can be formed integrally. The actuator-side portion may include the pin protruding from the radiator valve, e.g. from the mount, at least when the flow valve is not closed.

According to one embodiment, the auxiliary opening mechanism includes the radiator valve with the bypass valve and at least one actuation action neutralizer. This allows for redundancy. Apart from that, it is therefore possible to implement two different pressure thresholds, e.g.
- a first, lower pressure drop threshold for opening the bypass valve with a small flow diameter and
- a second, higher pressure drop threshold for the actuation action neutralizer that additionally overrules closing the flow valve (when the bypass valve fails or is too small such that the pressure drop further rises although the bypass valve is open).

The above problem is also solved by a heating system comprising an auxiliary opening mechanism according to any one of the embodiments described.

The heating system can comprise a heat pump, a heat exchanger, a circulation pump, at least one radiator, and at least one radiator valve for the at least one radiator, wherein the heating system includes the auxiliary opening mechanism (according to any one of the embodiments described) for opening the closed at least one radiator valve.

The heat pump provides heat via a primary fluid to a primary side of the heat exchanger. The circulation pump circulates the secondary fluid through the heat exchanger, such that heat provided at the primary side of the heat exchanger is transferred to the secondary side of the heat exchanger, in particular to the secondary fluid. The secondary fluid transports the heat to the at least one radiator. The radiator valve adjusts the flow of the secondary fluid through its corresponding radiator.

The heating system may comprise a controller for the heat pump and the circulation pump. Further, it can comprise sensing means for detecting a temperature drop of the primary fluid over the heat exchanger.

The heating system may comprise several radiators, each being equipped with a corresponding radiator valve. An auxiliary opening mechanism according to any one of the described embodiments may be applied to one of, several of, or all of the radiator valves, respectively. The embodiments may be all the same or different for at least some of the radiator valves.

There may be no fluid passage in parallel to the at least one radiator (and, if any, in parallel to the other radiators).

In one embodiment, the at least one radiator valve, preferably all radiator valves, are not controlled and/or supervised by the controller. The controller does not know whether the individual radiator valve is closed (or open).

The controller controls the circulation pump. The circulation pump provides a standard pressure drop (e.g. in the range from 0,1 bar to 0,2 bar) in normal operation, e.g. when the flow valve of at least one of the radiator valves is open. When there is no flow (or at least no significant flow) of the secondary fluid through the secondary side of the heat exchanger, the temperature drop of the primary fluid across the heat exchanger decreases. As the controller cannot operate the heat pump with less than the minimum heat output, the controller increases a pump head of the circulation pump, e.g. by increasing a pump power of the circulation pump. The increased pump head results in an increased pressure drop at the (at least one) radiator valve(s). Especially when all radiator valves are closed, the pressure drop exceeds the pressure drop threshold. The circulation pump causes that the pressure drop exceeds the pressure drop threshold. The auxiliary opening mechanism(s) ensure(s) that the second fluid can be circulated.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows a heat pump system;
- Fig. 2: shows a side view of a first embodiment of a radiator valve including a bypass valve;
- Fig. 3: shows a front view of a radiator valve of Fig. 2;
- Fig. 4: shows a cross-sectional view A-A of the radiator valve depicted in Figs. 2 and 3;
- Fig. 5: shows a perspective cross-sectional view of a second embodiment of a radiator valve including a bypass valve;
- Fig. 6: schematically shows an embodiment of a radiator valve including an actuation action neutralizer;
- Fig. 7: schematically shows an embodiment of a thermostat actuator including an actuation action neutralizer, wherein the thermostat actuator is detachably mounted to an actuator mount of a conventional radiator valve;
- Fig. 8: schematically shows an embodiment of an adapter including an actuation action neutralizer, wherein the adapter is detachably mounted between a conventional radiator valve and a conventional thermostat actuator;
- Fig. 9: schematically shows an embodiment of an actuation action neutralizer usable for the embodiments shown in Figs. 6, 7, and 8.

A heat pump system 1 comprises a heat pump 2, a heat exchanger 3 having a primary side 4 and a secondary side 5, a circulation pump 6, and several radiators 7 equipped with radiator valves 8, 108, 208, 308.

A primary fluid circuit connects the heat pump 6 with the primary side 4 of the heat exchanger 3. The primary fluid circuit contains a primary fluid, e.g. a refrigerant.

A secondary fluid circuit connects the secondary side 5 of the heat exchanger 3 with the circulation pump 6 and the radiators 7 equipped with the radiator valves 8, 108, 208, 308. Each of the radiator valves 8, 108, 208, 308 can be mounted directly at its corresponding radiator 7. The secondary fluid circuit contains a secondary fluid. The secondary fluid may include water.

In this example, all radiator valves 8, 108, 208, 308 (and the corresponding radiators 7) are connected to the circulation pump 6 in parallel.

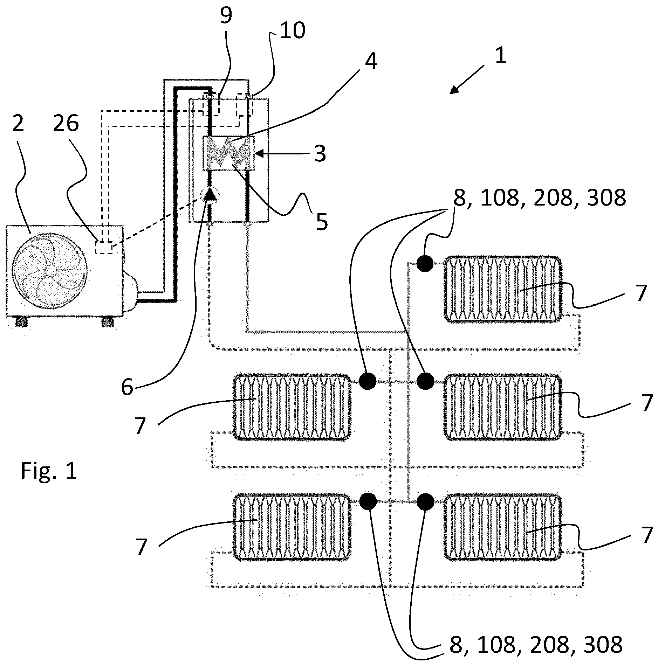

A controller 26 controls the operation of the heat pump 2 and the circulation pump 6. The controller 26 can be included in the heat pump 2 as shown in Fig. 1.

A first temperature sensor 9 is arranged at an inlet of the heat exchanger 3 for the primary fluid and a second temperature sensor 10 is arranged on at an outlet of the heat exchanger 3 for the primary fluid. For example, the heat exchanger 3 may include the first temperature sensor 9 and/or the second temperature sensor 10. The first temperature sensor 9 and the second temperature sensor 10 are operatively coupled to the controller 26.

In operation, the controller 26 tries to maintain a certain temperature drop of the primary fluid across the heat exchanger 3, i.e. from the inlet of the heat exchanger 3 for the primary fluid to the outlet of the heat exchanger 3 for the primary fluid. This ensures high efficiency of the heat pump 2. The desired temperature drop may be, for example, 8 K.

Instead or in addition to the temperature sensors 9, 10, other sensors allowing to calculate the temperature drop can be employed.

Any one of, several of, or all of the following can be integrated in the heat pump 3: The controller 26, the first temperature sensor 9, the second temperature sensor 10, the heat exchanger 3, and the circulation pump 6.

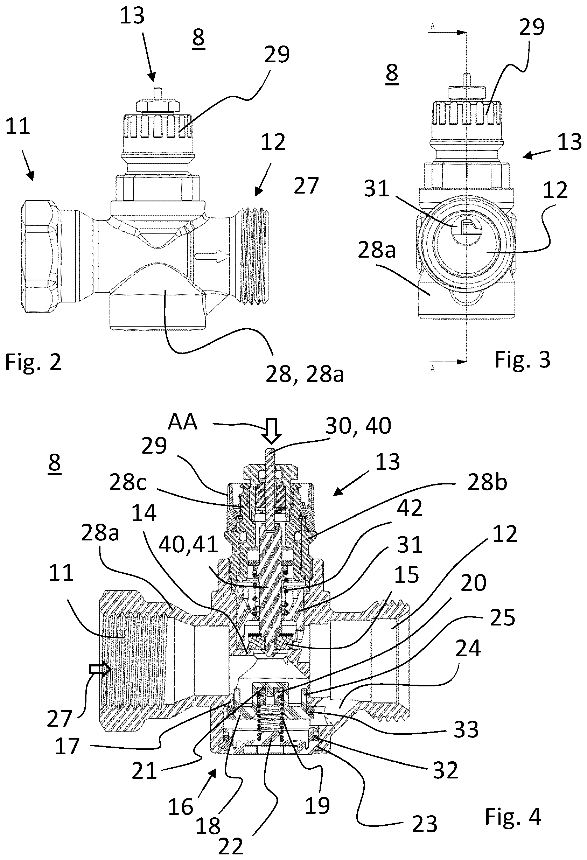

Inlet ports (see reference sign 11 in Figs. 2 to 8) of the radiator valves 8, 108, 208, 308 are in parallel fluidly connected to an outlet of the secondary side 5 of the heat exchanger 3. For each of the radiator valves 8, 108, 208, 308, the outlet port (see reference sign 12 in Figs. 2 to 8) is connected with an inlet of the corresponding radiator 7. The outlets of the radiators 7 are in parallel fluidly connected to an inlet of the circulation pump 6.

In a modification, one or more of the radiator valves 8, 108, 208, 308 can be arranged in the flow direction after the corresponding radiator 7 instead.

The circulation pump 6 comprises an outlet being fluidly connected to an inlet of the secondary side 5 of the heat exchanger 3. The arrow indicates a direction of flow in operation.

In general, the heating system 1 may comprise at least one radiator 7 with a corresponding radiator valve 8, 108, 208, 308.

Figs. 2 to 4 depict a first embodiment of a radiator valve 8 from different views.

Fig. 2 depicts the radiator valve 8 from a side view. The radiator valve 8 comprises a valve housing 28, an inlet port 11 (for the secondary fluid), and an outlet port 12 (for the secondary fluid). A flow valve 13 is arranged between the inlet port 11 and the outlet port 12. The flow valve 13 comprises a valve seat 14 and a valve element 15 (see Fig. 4).

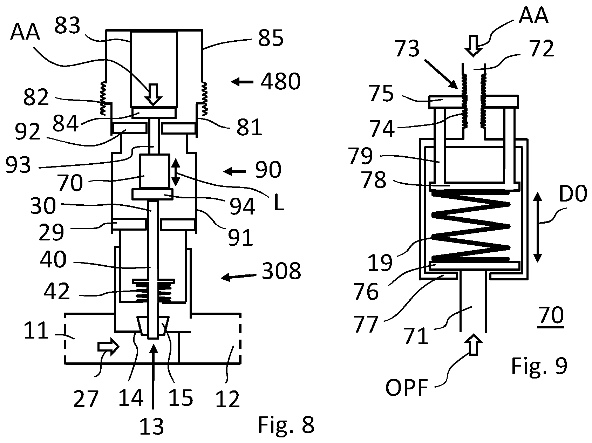

The radiator valve 8, in particular the flow valve 13, is configured for mounting an actuator (like a conventional thermostat actuator 480 as shown in Fig. 8) for actuating the flow valve 13. The radiator valve 8, in particular the flow valve 13, includes an actuator mount 29 for releasably mounting the actuator.

The radiator valve 8 may include the actuator, e.g. the conventional thermostat actuator 480 as shown in Fig. 8. The combination of the radiator valve 8 and the actuator for actuating the flow valve 13 can be referred to as "radiator valve assembly".

The radiator valve 8 comprises a valve stem assembly 40. In this embodiment, the valve stem assembly 40 comprises a valve stem 41 and a valve pin 30 for actuating the radiator valve 8, in particular the flow valve 13. The valve element 15 is at least axially fixed to the valve stem 41. A valve opening spring 42 biases the flow valve 13 towards a fully open state (not shown). In the fully open state, a displacement of the valve element 15 away from sealing abutment onto the valve seat 14 is maximized. Further, a protruding length of the valve pin 30 is at the maximum. In Fig. 4, the radiator valve 8 is closed. The valve element 15 sealingly abuts the valve seat 14. This is caused by a mechanical actuation action AA pushing the valve pin 30 into the radiator valve 8. The valve stem assembly 40 mechanically forwards the mechanical actuation action AA to the valve element 15, in more detail via the valve pin 30 and the valve stem 41. The mechanical actuation action AA presses the valve element 15 into abutment onto the valve seat, against a resilient force of the valve opening spring 42.

The actuator can engage the valve pin 30 (see Fig. 4) of the flow valve 13 in order to control the flow valve 13. The actuator can apply the mechanical actuation action AA onto the valve pin 30 in order to close the flow valve 13 by urging the valve element 15 into abutment onto the valve seat 14. If the actuator stops applying the mechanical actuation action AA, the valve opening spring 42 retracts the valve element 15 away from the abutment onto the valve seat 14.

Especially, the actuator can be a thermostat actuator like the conventional thermostat actuator 480 shown in Fig. 8. The thermostat actuator 480 is purely thermally driven, e.g. by thermically induced expansion and shrinkage. For example, the thermostat actuator 480 can include actuation action generator for generating the mechanical actuation action AA based on a target temperature of the thermostat actuator 480 and a temperature at the thermostat actuator 480. The actuation action generator 83 may be a bellow containing a fluid exhibiting thermal expansion (e.g. a gas and/or a liquid) or a wax motor.

The thermostat actuator 480 comprises target temperature adjustment means 82, 85 that allow increasing and decreasing the target temperature. The thermostat actuator 480 may comprise a grip or handle 85 operable by a user for adjusting the target temperature. The target temperature is adjustable by rotating the handle 85 relative to a mounting portion 81 (for engaging the actuator mount 29).

The actuator, e.g. the thermostat actuator 480, operates independently, especially independently from the controller 26.

In general, the actuator can be a manual actuator and/or electronic actuator.

Fig. 3 depicts the radiator valve 8 in a rear side view. **In** Fig. 3, the outlet port 12 and parts of the flow valve 13 including the actuator mount 29 and a part of adjustable balancing means 31 for hydraulic presetting of the radiator valve 8 can be seen.

Fig. 4 depicts a cross sectional view A-A of the radiator valve 8. Limited movement of the valve element 15 relative to the valve seat 14 is possible. The flow valve 13 can be closed by moving the valve element 15 into sealing abutment onto the valve seat 14. The flow valve 13 is opened by lifting the valve element 15 away from the valve seat 14.

The radiator valve 8 further comprises a bypass valve 16. The bypass valve 16 includes a second valve seat 17 and a second valve element 18.

The valve housing 28 comprises a main body 28a. The inlet port 11, the outlet port 12, the valve seat 14, and the second valve seat 17 are formed integrally with the main body 28a. The radiator valve 8 has a valve insert including, for example, the valve element 15, the valve stem assembly 40, the valve opening spring 42, further housing parts 28b, 28c of the valve housing 28, and the actuator mount 29.

The second valve element 18 is biased against the second valve seat 17 by means of a resilient counteractor. In this case, the resilient counteractor is a compressible coil spring 19. At its first (axial) end, the spring 19 axially abuts the second valve element 18 via an optional spacer 20. The spacer 20 is interposed between the spring 19 and the second valve element 18. A "touch point" between the second valve element 18 and the spring 19 (or the spacer 20, if interposed) is called engagement section 21. At its second (axial) end, the spring 19 is supported by an insert 22. The insert 22 is connected to the valve housing 28, in more detail to the main body 28a, by means of a threaded connection 23. Accordingly, the insert 22 comprises interaction means to be turned by the user and/or by a tool, e.g. a hexagon geometry or the like. The radiator valve 8 comprises a bypass channel 24, which fluidly connects the bypass valve 16 to the outlet port 12.

The second valve element 18 may be splined to the valve housing 28, e.g. to the main body 28a. In this embodiment, the second valve element 18 comprises ribs 25 guiding the second valve element 18 with respect to the second valve seat 17.

The radiator valve 8 may comprise insert sealing means, e.g. at least one O-ring 32, providing sealing between the valve housing 28 (in particular, the main body 28a) and the insert 22. Additionally or alternatively, the radiator valve 8 can comprise sealing means, e.g. an O-ring 33, for sealing between the second valve seat 17 and the second valve element 18.

An intended flow direction (a forward flow direction) through the radiator valve 8 is depicted by the arrow 27 in Figs. 2 and 4. The balancing means 31 are arranged downstream of the valve seat 14. The flow valve 13 and the bypass valve 16 are connected to the inlet port 11 in parallel, wherein the inlet port 11 is arranged upstream of the flow valve 13 and the bypass valve 16. Further, the flow valve 13 and the bypass valve 16 are fluidly connect to the outlet port 12 in parallel, wherein the outlet port 12 is arranged downstream of the flow valve 13 and the bypass valve 16 (referring to the intended flow direction in operation). In this exemplary embodiment, the inlet port 1 has an inner thread. The outlet port 12 has an outer thread.

The bypass valve 16 is pressure-operated, being sensitive to a pressure drop from the inlet port 11 to the outlet port 12. If the pressure drop exceeds a specific pressure-drop threshold, the bypass valve 16 opens and provides a flow path from the inlet port 11 to the outlet port 12 through the bypass channel 24. The bypass valve 16 is a one-way valve. It does not allow a rearward flow (against the intended flow direction), i.e. from the outlet port 12 to the inlet port 11.

When the pressure drop exceeds the pressure-drop threshold, e.g. 0,55 bar, the pressure drop presses the second valve element 18 away from the second valve seat 17, against a pre-load of the spring 19. In other words, the pressure drop is then sufficient to overcome the pre-load of the spring 19.

In this exemplary embodiment, the pre-load of the spring 19 is adjustable by adapting a pre-compression of the spring 19. The pre-compression is adjustable by exchanging the spacer 20 with a thicker or thinner spacer. Apart from that, the pre-compression (and hence the pre-load) is adjustable by the insert 22 and its threaded connection 23 to the valve housing 28, the so-called threaded adjusting means. The threaded connection 23 has a predefined pitch, e.g. 1 mm. One full revolution of the insert 22 compresses or releases the spring 19 by one millimeter. Other pitches are possible. The insert 22 comprises the interaction means for tighten or loosen the insert 22, e.g. a hexagon socket, or other screw drives. Accordingly, the pre-load of the spring 19 is adjustable by screwing the insert 22 relative to the valve housing 28. If there are more radiators 7 in the heating system 1 (as shown in Fig. 1), the pre-loads of the springs 19 of the radiator valves 8 can be different.

The spring 19, more precisely a first axial end thereof, abuts the second valve element 18 (with the interposed spacer 20) at the engagement section 21. The engagement section 21 is located above the second valve seat 17 in a closing direction of the bypass valve 16, more specifically of the second valve element 18 relative to the second valve seat 17. In Fig. 4, the closing direction is vertically upwards. The second valve element 18 is formed accordingly and provides a guidance for the spring 19. The spacer 20 and the first axial end of the spring 19 are accommodated within a deepening.

The guidance allows an easy installation of the spacer 20 and the spring 19. The spacer 20 and the spring 19 are reliably secured within the deepening of the second valve element 18 when the insert 22 is fixed to the main body 28a.

The spring 19 comprises a spring diameter which is equal or less than 50 % of a diameter of the second valve seat 17. The diameter of the second valve seat 17 refers to its inner diameter. The allows for limited pivoting of the second valve element 18 about the engagement section 21.

The arrangement of the engagement section 21 relative to the second valve seat 17 and the spring diameter being considerably smaller than the diameter of the second valve seat 17 result in a reduced risk for fluttering and/or flickering of the second valve element 18.

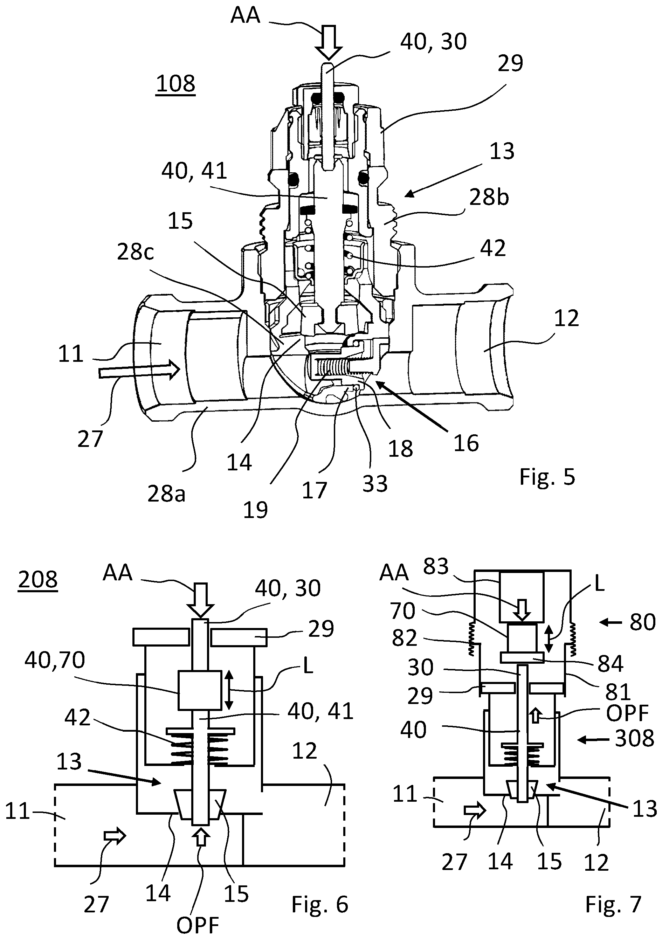

Another embodiment of a radiator valve 108 including a bypass valve 16 is shown in Fig. 5. In general, the construction and the advantages of the radiator valve 108 are similar to those of the radiator valve 8. Corresponding elements are referred to by the same reference signs and only relevant differences are explained in the following.

In the radiator valve 108, the valve seat 14 is not integrally formed with the main body 28a but included in the valve insert. The second valve seat 18 is also mounted to the valve insert. This can facilitate the final assembly.

Fig. 6 schematically shows a further embodiment of a radiator valve 208. In general, the construction and the advantages of the radiator valve 208 are similar to those of the radiator valves 8 and 108. Corresponding elements are referred to by the same reference signs and only relevant differences are explained in the following.

The radiator valves 8 and 108 implement an auxiliary opening mechanism for opening the closed radiator valves 8, 108 by means of the bypass valve 16.

The radiator valve 208 shown in Fig. 6 includes an actuation action neutralizer 70 for implementing the auxiliary opening mechanism. An example for a suitable embodiment of the actuation action neutralizer 70 is shown in Fig. 9.

In Fig. 6, the radiator valve 208 is closed. The mechanical actuation action AA is applied onto the valve pin 30, e.g. from the thermostat actuator 480 that could be mounted on the actuator mount 29.

The valve stem assembly 40 including the valve pin 30 and the valve stem 41 forwards the mechanical actuation action AA to the valve element 15. This urges the valve stem 41 against the resilient force of the valve opening spring 42 to the valve seat 14. As a consequence, the valve element 15 abuts and seals against the valve seat 14 and the flow valve 13 is closed.

In this embodiment, the valve stem assembly 40 includes the actuation action neutralizer 70.

In normal operation, an effective total length L of the actuation action neutralizer 70 corresponds to a predetermined maximum effective total length. In Fig. 6, the pressure drop from the inlet port 11 to the outlet port 12 is smaller than the pressure drop threshold. The actuation action neutralizer 70 has (at least substantially) the maximum effective total length. In any case, the effective total length L is long enough to hold the valve element 15 in sealing abutment onto the valve seat 14 while the mechanical actuation action AA is applied. In this situation, the actuation action neutralizer 70 sufficiently forwards the mechanical actuation action AA from the valve pin 30 to the valve stem 41.

When the pressure drop now rises above the pressure drop threshold, the actuation action neutralizer 70 resiliently yields. The high pressure drop is, in this case, able to overcome a resilient yield resistance of the actuation action neutralizer 70. As a consequence, the high pressure drop compresses the actuation action neutralizer 70 such that the effective total length L decreases. This allows the high pressure drop to push the valve element 15 away from abutment onto the valve seat 14 although the mechanical actuation action AA is still applied onto the valve pin 30. This opens a flow path from the inlet port 11 to the outlet port 12. The mechanical actuation action AA is (at least) partly resiliently absorbed by the actuation action neutralizer 70 in this situation. The high pressure drop (exceeding the pressure drop threshold) "overrules" (suspends) the mechanical actuation action AA for keeping the radiator valve 208 closed. When the pressure drop decreases below the pressure drop threshold while the mechanical actuation action AA is still applied, the actuation action neutralizer 70 expands again towards its maximum effective total length and thereby resiliently urges the valve element 15 into sealing abutment onto the valve seat 14 again.

Fig. 9 shows an exemplary embodiment of the actuation action neutralizer 70. It comprises a valve element-side portion 71 and an actuator-side portion 72.

In the embodiment shown in Fig. 6, the valve element-side portion 71 shown in Fig. 7 of the actuation action neutralizer 70 is at least axially fixed relative to the valve stem 41. It may be directly fixed to or even formed integrally with the valve stem 41. The actuator-side portion 72 is at least axially fixed relative to the valve pin 30. It may be directly fixed to or even formed integrally with the valve pin 30. In Fig. 6, the actuation action neutralizer 70 is interposed between the vale stem 41 and the valve pin 30. In a modification (not shown), the valve pin 30 or the valve stem 41 can include the whole actuation action neutralizer 70.

The actuation action neutralizer 70 allows limited movement of the valve element-side portion 71 relative to the actuator-side portion 72. In more detail, said two portions 71, 72 can be pushed together, thereby reducing the effective total length L. In this embodiment, said two portions 71, 72 can partly telescope together.

The effective total length L (see Figs. 6 to 8) of the actuation action neutralizer 70 is limited to the predetermined maximum effective total length. The effective total length L corresponds to the predetermined maximum effective total length when the first engagement portion 76 abuts an expansion end stop 77 (see Fig. 7).

The actuation action neutralizer 70 includes the resilient counteractor, in this example in form of a compression coil spring 19. The resilient counteractor resiliently biases the actuation action neutralizer 70 to have its maximum effective total length. The maximum effective total length is independent from the pre-compression and the pre-load of the resilient counteractor.

If the opening force OPF provided by the pressure drop exceeds a resilient biasing force of the resilient counteractor, then the first engagement portion 76 and the valve element-side portion 71 move towards the actuator-side portion 72.

The spring 19 is arranged between the first engagement portion 76 and the second engagement portion 78. In this example, a threaded adjusting means 43 includes a first thread 45 on the actuator-side portion 72 and a nut 75 with a second thread engaging the first thread 45. Rotating the nut 75 changes axial positions of the nut 75 relative to the actuator-side portion 72 and relative to the expansion end stop 77 (which is axially fixed with respect to the actuator-side portion 72). The second engagement portion 78 comprises pins 79 engaging the nut 75. The spring 19 causes axial abutment of the second engagement portion 78 with respect to the nut 75 (via the pins 79). Therefore, the second engagement portion 78 follows any axial movement of the nut 75 relative to the actuator-side portion 72. If the nut 75 is screwed in a first screwing direction relative to the actuator-side portion 72, it moves axially towards the first engagement portion 76. The pre-compression and hence the pre-load of the spring 19 and hence the pressure drop threshold increase. If the nut 75 is screwed in a second screwing direction relative to the actuator-side portion 72 (opposite to the first screwing direction), it moves axially away from the first engagement portion 76. The pre-compression and hence the pre-load of the spring 19 and hence the pressure-drop threshold decrease.

Fig. 7 shows, inter alia, a thermostat actuator 80. Similar to the conventional thermostat actuator 80, the thermostat actuator 80 includes the mounting portion 81 (for engaging the actuator mount 29), the target temperature adjustment means 82, 85, a pin engager 84 (for engaging the valve pin 30), and an actuation action generator. The actuation action generator can be a thermally-driven actuation action generator, e.g. in the form of the actuation action generator 83. In modification (not shown), the actuator action generator is electrically-driven.

Different from the conventional thermostat actuator 480, the thermostat actuator 80 shown in Fig. 7 includes the actuation action neutralizer 70. The latter is arranged between the actuation action generator and the pin engager 84. In this case, the actuator-side portion 72 is at least axially coupled to the actuation action generator and the valve element-side portion 71 is at least axially fixed relative to the pin engager 84.

In Fig. 7, the thermostat actuator 80 is detachably mounted to the actuator mount 29 of the conventional radiator valve 308. The pin engager 84 engages the valve pin 30. As the valve stem assembly 40 of the radiator valve 308 transfers the opening force OPF caused by the pressure drop to the thermostat actuator 80, the actuation action neutralizer 70 is integratable into the thermostat actuator 80.

Fig. 8 shows, inter alia, an adapter 90 configured to be detachably mounted between the conventional thermostat actuator 480 and the conventional radiator valve 308. In Fig. 8, the adapter 90 is actually mounted to the actuator mount 29 of the radiator valve 308. A housing 91 of the adapter 90 comprises corresponding mounting means (not shown). Furthermore, the housing 91 comprises an actuator mount 92. The actuator mount 92 may be of the same type as the actuator mount 29 of the radiator valve 308. The adapter 90 comprises an adapter pin 93 to be engaged by the thermostat actuator 480, e.g. like the valve pin 30. It further comprises a pin engager 94.

The adapter 90 includes the actuation action neutralizer 70. The latter is arranged between the adapter pin 93 and the pin engager 94.

The adapter 90 is configured to receive the mechanical actuation action AA from the thermostat actuator 480. The adapter 90 also receives, via the pin engager 94, the counteracting opening force OPF, which results from the pressure drop, from the radiator valve 308. Under normal circumstances, the adapter 90 forwards the mechanical actuation action AA in an unimpaired manner to the valve pin 30 of the radiator valve 308. However, when the opening force OPF exceeds the resilient yield resistance of the actuation action neutralizer 70, the actuation action neutralizer 70 at least partly absorbs and neutralizes the mechanical actuation action AA.

The function of the heating system 1 is described in the following: The heat pump 2 provides heat via a primary fluid to the primary side 4 side of the heat exchanger 3. Within the heat exchanger 3, heat is transferred to the secondary fluid supplied to the secondary side 5 of the heat exchanger 3. The circulation pump 6 circulates the secondary fluid through the radiator valves 8, 108, 208, 308 and the radiators 7. Heat is dissipated into rooms where the radiators 7 are installed.

It can happen that the secondary fluid circuit requires some time-averaged heat uptake larger than zero but less than the minimum heat output of the heat pump 2. As the radiator valves 8, 108, 208, 308 are autonomous from the controller 26, the controller 26 has no information about the states of the radiator valves 8, 108, 208, 308. A duty cycle of operation of the heat pump 2 may temporarily overlap with a time period during which all radiator valves 8, 108, 208, 308 are closed. Hence, the heat provided from the heat pump 2 cannot be completely transferred to the secondary fluid. The temperature drop of the primary fluid of the primary fluid over the heat exchanger 3 decreases, which is detected by the controller 26 via the temperature sensors 9, 10.

The controller 26 operates the circulation pump 6 to increase its pump head. If at least one of the radiator valves 8, 108, 208, 308 is meanwhile open because heating by the corresponding radiator 7 is meanwhile required, the flow through the latter is increased due to the increased pump head.

However, if all the radiator valves 8, 108, 208, 308 are still closed, the increased pump head causes that the pressure drop over the radiator valves 8, 108, 208, 308 exceeds the pressure drop threshold. Applying the auxiliary opening mechanism to at least one of the radiator valves 8, 108, 208, 308 ensures that the at least one radiator valve 8, 108, 208, 308 opens a flow path for the circulation of the secondary fluid. In this situation, the corresponding radiator 7 is used as buffer for unwanted heat and for dissipating unwanted heat to the corresponding room.

Preferably, embodiments of the auxiliary opening system are implemented regarding several of (at least two) or even all of the more radiator valves 8, 108, 208, 308. This ensures that all of the radiator valves 8, 108, 208, 308, for which a respective embodiment of the auxiliary opening system is implemented, and their corresponding radiators 7 contribute to circulating the secondary fluid and dissipating unwanted heat. If the unwanted heat is distributed to several radiators 7, the individual room temperatures rise less excessively.

The actuators for all radiator valves 8, 108, 208, 308 of the heating system 1 may operate independently, e.g. from each other and/or from the controller 26. All actuators might be thermostat actuators and their temperature settings may be set individually by the user. The auxiliary opening mechanisms works for the concerned radiator valves 8, 108, 208, 308 work autonomously, solely depending on the local forward pressure drop. The functionality is implemented "decentrally", in a distributed manner. This finally avoids overpressure in the heat pump 2 in a particularly reliable manner.

The secondary fluid circuit is free of any additional fluid flow path in parallel to the parallel flow paths with the radiator valves 8, 108, 208, 308 and the radiators 7. The secondary fluid circuit does not need an additional bypass fluid line with a buffer tank for buffering unwanted heat.

## Claims

1. Auxiliary opening mechanism for opening a closed radiator valve (8, 108, 208, 308),
wherein the auxiliary opening mechanism comprises the radiator valve (8, 108, 208, 308) having an inlet port (11) and an outlet port (12),
wherein the radiator valve (8, 108, 208, 308) comprises a flow valve (13) between the inlet port (11) and the outlet port (12), wherein the flow valve (13) includes a valve seat (14) and a valve element (15) moveable relative to the valve seat (14),
wherein the auxiliary opening mechanism is configured such that a pressure drop from the inlet port (11) to the outlet port (12) mechanically opens a fluid flow path from the inlet port (11) to the outlet port (12) when the pressure drop exceeds a pressure drop threshold while the radiator valve (8, 108, 208, 308) is closed,
wherein the auxiliary opening mechanism is configured such that the pressure drop threshold is adjustable.

2. Auxiliary opening mechanism according to claim 1, wherein the pressure drop threshold is in the range from 0,3 bar to 0,8 bar.

3. Auxiliary opening mechanism according to any one of the preceding claims, wherein the auxiliary opening mechanism comprises a resilient counteractor (19) counteracting an opening force (OPF), which is caused by the pressure drop while the radiator valve (8, 108, 208, 308) is closed, wherein the resilient counteractor (19) prevents the pressure drop from mechanically opening the fluid flow path of the auxiliary opening mechanism when the pressure drop is below the pressure drop threshold while the radiator valve (8, 108, 208, 308) is closed.

4. Auxiliary opening mechanism according to claim 3, wherein a pre-load of the resilient counteractor (19) is adjustable by a spacer (20) and/or a threaded adjusting means (22, 23, 73, 74, 75).

5. Auxiliary opening mechanism according to any one of claims 1 to 4, wherein the radiator valve (8, 108) further includes a bypass valve (16) between the inlet port (11) and the outlet port (12), wherein the bypass valve (16) is configured to open the flow path when the pressure drop from the inlet port (11) to the outlet port (12) exceeds the pressure drop threshold.

6. Auxiliary opening mechanism according to any one of the claims 3 and 4, and according to claim 5, wherein the bypass valve (16) comprises a second valve seat (17) and a second valve element (18), wherein the resilient counteractor (19) biases the second valve element (18) to the second valve seat (17).

7. Auxiliary opening mechanism according to claim 6, wherein the resilient counteractor comprises a spring (19), wherein
- a spring diameter of the spring (19) is equal to or less than 50% of a diameter of the second valve seat (17), and/or
- wherein the spring (19) is a compression spring (19) and engages the second valve element (18) at an engagement section (21), wherein the engagement section (21) is located above the second valve seat (17) along a closing direction of the second valve element (18).

8. Auxiliary opening mechanism according to any one of the preceding claims, wherein the radiator valve (208, 308) comprises at least one of
- an actuator mount (29) for an actuator (80, 480) and
- an actuator (80, 480),
the actuator (80, 480) providing a mechanical actuation action (AA) for closing the radiator valve (208, 308),
wherein the auxiliary opening mechanism includes an actuation action neutralizer (70) that resiliently absorbs the mechanical actuation action (AA) at least partly when the pressure drop exceeds the pressure drop threshold while the radiator valve (208, 308) is closed, thereby allowing the pressure drop to open the radiator valve (208, 308) against the mechanical actuation action (AA) at least partly.

9. Auxiliary opening mechanism according to claim 8, wherein the actuation action neutralizer (70) comprises an actuator-side portion (72) for receiving the mechanical actuation action (AA) and a valve element-side portion (71), wherein the actuation action neutralizer (70) allows limited movement of the valve element-side portion (71) relative to the actuator-side portion (72) such that an effective total length (L) of the actuation action neutralizer (70) is reducible.

10. Auxiliary opening mechanism according to any one of the claims 3 and 4, and according to claim 9, wherein the actuation action neutralizer (70) includes the counteractor (19) and wherein the counteractor (19) pushes the valve element-side portion (71) and the actuator-side portion (72) apart.

11. Auxiliary opening mechanism according to any one of the claims 8 to 10, wherein the radiator valve (208) includes the actuation action neutralizer (70).

12. Auxiliary opening mechanism according to any one of the claims 8 to 10, wherein the auxiliary opening mechanism includes at least the actuator (80) and wherein the actuator (80) includes the actuation action neutralizer (70).

13. Auxiliary opening mechanism according to any one of the claims 8 to 10, wherein the auxiliary opening mechanism includes at least an adapter (90) for being mounted between the radiator valve (308) and the actuator (480), wherein the adapter (90) is configured to mechanically forward the mechanical actuation action (AA) provided by the actuator (480) to the radiator valve (308), and wherein the adapter (90) includes the actuation action neutralizer (70).

14. Heating system (1) comprising a heat pump (2), a heat exchanger (3), a circulation pump (6), at least one radiator (7), and at least one radiator valve (8, 108, 208, 308) for the at least one radiator (7),
wherein the heating system (1) includes the auxiliary opening mechanism for opening the closed at least one radiator valve (8, 108, 208, 308) according to any one of the preceding claims.

## Patentansprüche

1. Hilfsöffnungsmechanismus zum Öffnen eines geschlossenen Radiatorventils (8, 108, 208, 308),
wobei der Hilfsöffnungsmechanismus das Radiatorventil (8, 108, 208, 308) mit einem Einlassanschluss (11) und einem Auslassanschluss (12) umfasst,
wobei das Radiatorventil (8, 108, 208, 308) ein Durchflussventil (13) zwischen dem Einlassanschluss (11) und dem Auslassanschluss (12) umfasst, wobei das Durchflussventil (13) einen Ventilsitz (14) und ein relativ zu dem Ventilsitz (14) bewegliches Ventilelement (15) umfasst,
wobei der Hilfsöffnungsmechanismus dazu eingerichtet ist, dass ein Druckabfall von dem Einlassanschluss (11) zu dem Auslassanschluss (12) mechanisch einen Fluidströmungsweg von dem Einlassanschluss (11) zu dem Auslassanschluss (12) öffnet, wenn der Druckabfall einen Druckabfallschwellenwert überschreitet, während das Radiatorventil (8, 108, 208, 308) geschlossen ist,
wobei der Hilfsöffnungsmechanismus so ausgebildet ist, dass der Druckabfallschwellenwert einstellbar ist.

2. Hilfsöffnungsmechanismus nach Anspruch 1, wobei der Druckabfallschwellenwert im Bereich von 0,3 bar bis 0,8 bar liegt.

3. Hilfsöffnungsmechanismus nach einem der vorhergehenden Ansprüche, wobei der Hilfsöffnungsmechanismus ein elastisches Gegenelement (19) umfasst, welches einer Öffnungskraft (OPF) entgegenwirkt, welche durch den Druckabfall verursacht wird, während das Radiatorventil (8, 108, 208, 308) geschlossen ist, wobei das elastische Gegenelement (19) verhindert, dass der Druckabfall den Fluidströmungsweg des Hilfsöffnungsmechanismus mechanisch öffnet, wenn der Druckabfallunterhalb des Druckabfallschwellenwerts liegt, während das Radiatorventil (8, 108, 208, 308) geschlossen ist.

4. Hilfsöffnungsmechanismus nach Anspruch 3, wobei eine Vorspannung des elastischen Gegenelements (19) durch einen Abstandhalter (20) und/oder Gewinde-Einstellmittel (22, 23, 73, 74, 75) einstellbar ist.

5. Hilfsöffnungsmechanismus nach einem der Ansprüche 1 bis 4, wobei das Radiatorventil (8, 108) ferner ein Bypassventil (16) zwischen dem Einlassanschluss (11) und dem Auslassanschluss (12) umfasst, wobei das Bypassventil (16) dazu eingerichtet ist, den Strömungsweg zu öffnen, wenn der Druckabfall von dem Einlassanschluss (11) zu dem Auslassanschluss (12) den Druckabfallschwellenwert überschreitet.

6. Hilfsöffnungsmechanismus nach einem der Ansprüche 3 oder 4 sowie nach Anspruch 5, wobei das Bypassventil (16) einen zweiten Ventilsitz (17) und ein zweites Ventilelement (18) umfasst, wobei das elastische Gegenelement (19) das zweite Ventilelement (18) in Richtung des zweiten Ventilsitzes (17) vorspannt.

7. Hilfsöffnungsmechanismus nach Anspruch 6, wobei das elastische Gegenelement eine Feder (19) umfasst, wobei
- ein Federdurchmesser der Feder (19) gleich oder kleiner als 50 % eines Durchmessers des zweiten Ventilsitzes (17) ist, und/oder
- wobei die Feder (19) eine Druckfeder (19) ist und an einem Eingriffsabschnitt (21) mit dem zweiten Ventilelement (18) in Eingriff steht, wobei sich der Eingriffsabschnitt (21) entlang einer Schließrichtung des zweiten Ventilelements (18) oberhalb des zweiten Ventilsitzes (17) befindet.

8. Hilfsöffnungsmechanismus nach einem der vorhergehenden Ansprüche, wobei das Radiatorventil (208, 308) mindestens eines von
- einer Aktoraufnahme (29) für einen Aktor (80, 480) und
- einem Aktor (80, 480),
umfasst,
wobei der Aktor (80, 480) eine mechanische Aktorwirkung (AA) zum Schließen des Radiatorventils (208, 308) bereitstellt,
wobei der Hilfsöffnungsmechanismus einen Aktorwirkungsneutralisator (70) umfasst, welcher die mechanische Aktorwirkung (AA) zumindest teilweise elastisch absorbiert, wenn der Druckabfall den Druckabfallschwellenwert überschreitet, während das Radiatorventil (208, 308) geschlossen ist, wodurch es dem Druckabfall ermöglicht, das Radiatorventil (208, 308) zumindest teilweise gegen die mechanische Aktorwirkung (AA) zu öffnen.

9. Hilfsöffnungsmechanismus nach Anspruch 8, wobei der Aktorwirkungsneutralisator (70) einen aktorseitigen Abschnitt (72) zur Aufnahme der mechanischen Aktorwirkung (AA) und einen ventilelementseitigen Abschnitt (71) aufweist, wobei der Aktorwirkungsneutralisator (70) eine begrenzte Bewegung des ventilelementseitigen Abschnitts (71) relativ zum aktorseitigen Abschnitt (72) erlaubt, so dass eine effektive Gesamtlänge (L) des Aktorwirkungsneutralisator (70) reduzierbar ist.

10. Hilfsöffnungsmechanismus nach einem der Ansprüche 3 oder 4 sowie nach Anspruch 9, wobei der Aktorwirkungsneutralisator (70) das Gegenelement (19) umfasst und wobei das Gegenelement (19) den ventilelementseitigen Abschnitt (71) und den aktorseitigen Abschnitt (72) auseinanderdrückt.

11. Hilfsöffnungsmechanismus nach einem der Ansprüche 8 bis 10, wobei das Radiatorventil (208) den Aktorwirkungsneutralisator (70) umfasst.

12. Hilfsöffnungsmechanismus nach einem der Ansprüche 8 bis 10, wobei der Hilfsöffnungsmechanismus mindestens den Aktor (80) umfasst und wobei der Aktor (80) den Aktorwirkungsneutralisator (70) umfasst.

13. Hilfsöffnungsmechanismus nach einem der Ansprüche 8 bis 10, wobei der Hilfsöffnungsmechanismus mindestens einen Adapter (90) zur Montage zwischen dem Radiatorventil (308) und dem Aktor (480) umfasst, wobei der Adapter (90) dazu eingerichtet ist, die von dem Aktor (480) bereitgestellte mechanische Aktorwirkung auf das Radiatorventil (308) weiterzuleiten, und wobei der Adapter (90) den Aktorwirkungsneutralisator (70) umfasst.

14. Heizungssystem (1) umfassend eine Wärmepumpe (2), einen Wärmetauscher (3), eine Umwälzpumpe (6), mindestens einen Radiator (7) und mindestens ein Radiatorventil (8, 108, 208, 308) für den mindestens einen Radiator (7),
wobei das Heizungssystem (1) den Hilfsöffnungsmechanismus zum Öffnen des geschlossenen mindestens einen Radiatorventils (8, 108, 208, 308) gemäß einem der vorhergehenden Ansprüche umfasst.

## Revendications

1. Mécanisme d'ouverture auxiliaire pour ouvrir une vanne de radiateur fermée (8, 108, 208, 308),
où le mécanisme d'ouverture auxiliaire comprend la vanne de radiateur (8, 108, 208, 308) ayant un orifice d'entrée (11) et un orifice de sortie (12),
où la vanne de radiateur (8, 108, 208, 308) comprend une vanne de débit (13) entre l'orifice d'entrée (11) et l'orifice de sortie (12), où la vanne de débit (13) inclut un siège de vanne (14) et un élément de vanne (15) mobile par rapport au siège de vanne (14),
où le mécanisme d'ouverture auxiliaire est configuré de sorte qu'une chute de pression de l'orifice d'entrée (11) à l'orifice de sortie (12) ouvre mécaniquement un chemin d'écoulement de fluide de l'orifice d'entrée (11) à l'orifice de sortie (12) lorsque la chute de pression dépasse un seuil de chute de pression alors que la vanne de radiateur (8, 108, 208, 308) est fermée,
où le mécanisme d'ouverture auxiliaire est configuré de sorte que le seuil de chute de pression soit réglable.

2. Mécanisme d'ouverture auxiliaire selon la revendication 1, dans lequel le seuil de chute de pression se trouve dans une plage allant de 0,3 bar à 0,8 bar.

3. Mécanisme d'ouverture auxiliaire selon l'une quelconque des revendications précédentes, dans lequel le mécanisme d'ouverture auxiliaire comprend un élément de contre-réaction élastique (19) s'opposant à une force d'ouverture (OPF), qui est provoquée par la chute de pression tandis que la vanne de radiateur (8, 108, 208, 308) est fermée, où l'élément de contre-réaction élastique (19) empêche la chute de pression d'ouvrir mécaniquement le chemin d'écoulement de fluide du mécanisme d'ouverture auxiliaire lorsque la chute de pression est inférieure au seuil de chute de pression tandis que la vanne de radiateur (8, 108, 208, 308) est fermée.

4. Mécanisme d'ouverture auxiliaire selon la revendication 3, dans lequel une précharge de l'élément de contre-réaction élastique (19) est réglable par une entretoise (20) et/ou un moyen de réglage fileté (22, 23, 73, 74, 75).

5. Mécanisme d'ouverture auxiliaire selon l'une quelconque des revendications 1 à 4, dans lequel la vanne de radiateur (8, 108) inclut en outre une vanne de dérivation (16) entre l'orifice d'entrée (11) et l'orifice de sortie (12), où la vanne de dérivation (16) est configurée pour ouvrir le chemin d'écoulement lorsque la chute de pression de l'orifice d'entrée (11) à l'orifice de sortie (12) dépasse le seuil de chute de pression.

6. Mécanisme d'ouverture auxiliaire selon l'une quelconque des revendications 3 et 4, et selon la revendication 5, dans lequel la vanne de dérivation (16) comprend un second siège de vanne (17) et un second élément de vanne (18), où l'élément de contre-réaction élastique (19) sollicite le second élément de vanne (18) vers le second siège de vanne (17).

7. Mécanisme d'ouverture auxiliaire selon la revendication 6, dans lequel l'élément de contre-réaction élastique comprend un ressort (19), où
- le diamètre de ressort du ressort (19) est inférieur ou égal à 50% du diamètre du second siège de vanne (17), et/ou
- où le ressort (19) est un ressort de compression (19) et s'engage avec le second élément de vanne (18) au niveau d'une section d'engagement (21), où la section d'engagement (21) est située au-dessus du second siège de vanne (17) le long d'une direction de fermeture du second élément de vanne (18).

8. Mécanisme d'ouverture auxiliaire selon l'une quelconque des revendications précédentes, dans lequel la vanne de radiateur (208, 308) comprend au moins l'un parmi
- un support d'actionneur (29) pour un actionneur (80, 480) et
- un actionneur (80, 480),
l'actionneur (80, 480) fournissant une action d'actionnement mécanique (AA) pour fermer la vanne de radiateur (208, 308),
où le mécanisme d'ouverture auxiliaire inclut un dispositif de neutralisation d'action d'actionnement (70) qui absorbe de manière élastique l'action d'actionnement mécanique (AA) au moins partiellement lorsque la chute de pression dépasse le seuil de chute de pression tandis que la vanne de radiateur (208, 308) est fermée, permettant ainsi à la chute de pression d'ouvrir la vanne de radiateur (208, 308) à l'encontre de l'action d'actionnement mécanique (AA) au moins partiellement.

9. Mécanisme d'ouverture auxiliaire selon la revendication 8, dans lequel le dispositif de neutralisation d'action d'actionnement (70) comprend une partie côté actionneur (72) pour recevoir l'action d'actionnement mécanique (AA) et une partie côté élément de vanne (71), où le dispositif de neutralisation d'action d'actionnement (70) permet un mouvement limité de la partie côté élément de vanne (71) par rapport à la partie côté actionneur (72), de sorte qu'une longueur totale effective (L) du dispositif de neutralisation d'action d'actionnement (70) puisse être réduite.

10. Mécanisme d'ouverture auxiliaire selon l'une quelconque des revendications 3 et 4, et selon la revendication 9, dans lequel le dispositif de neutralisation d'action d'actionnement (70) inclut l'élément de contre-réaction (19) et où l'élément de contre-réaction (19) écarte la partie côté élément de vanne (71) et la partie côté actionneur (72) l'une de l'autre.

11. Mécanisme d'ouverture auxiliaire selon l'une quelconque des revendications 8 à 10,
dans lequel la vanne de radiateur (208) inclut le dispositif de neutralisation d'action d'actionnement (70).

12. Mécanisme d'ouverture auxiliaire selon l'une quelconque des revendications 8 à 10,
dans lequel le mécanisme d'ouverture auxiliaire inclut au moins l'actionneur (80) et où l'actionneur (80) inclut le dispositif de neutralisation d'action d'actionnement (70).

13. Mécanisme d'ouverture auxiliaire selon l'une quelconque des revendications 8 à 10,
dans lequel le mécanisme d'ouverture auxiliaire inclut au moins un adaptateur (90) pour être monté entre la vanne de radiateur (308) et l'actionneur (480), où l'adaptateur (90) est configuré pour transmettre mécaniquement l'action d'actionnement mécanique (AA) fournie par l'actionneur (480) à la vanne de radiateur (308), et où l'adaptateur (90) inclut le dispositif de neutralisation d'action d'actionnement (70).

14. Système de chauffage (1) comprenant une pompe à chaleur (2), un échangeur de chaleur (3), une pompe de circulation (6), au moins un radiateur (7) et au moins une vanne de radiateur (8, 108, 208, 308) pour l'au moins un radiateur (7),
où le système de chauffage (1) inclut le mécanisme d'ouverture auxiliaire pour ouvrir l'au moins une vanne de radiateur fermée (8, 108, 208, 308) selon l'une quelconque des revendications précédentes.
